# EUROPÄISCHE PATENTSCHRIFT

(11) **EP 3 360 759 B1**
(45) Veröffentlichungstag und Bekanntmachung des Hinweises auf die Patenterteilung: **03.04.2019**
(21) Anmeldenummer: 17171027.0
(22) Anmeldetag: 15.05.2017
(51) Int. Cl.: B62D 21/15, B62D 25/20, B60K 1/04

(54) **FAHRZEUG MIT EINEM ELEKTRISCHEN ANTRIEBSMOTOR**
VEHICLE WITH AN ELECTRIC DRIVE MOTOR
VÉHICULE AVEC UN SYSTÈME D'ENTRAÎNEMENT COMPRENANT UN ÉLECTROMOTEUR

(30) Priorität: 14.02.2017 EP 17156001
(43) Veröffentlichungstag der Anmeldung: 15.08.2018
(73) Patentinhaber: MAGNA STEYR Fahrzeugtechnik AG & Co KG, 8041 Graz (AT)
(72) Erfinder: ERLACHER, Manuel, 9545 Radenthein (AT); HÖRMANN, Reinhard, 8151 Hitzendorf (AT); PLANKA, Franz, 9433 St. Andrä (AT); ZACHNEGGER, Harald, 8041 Graz (AT)
(74) Vertreter: Zangger, Bernd

(56) Entgegenhaltungen:
- DE-A1-102010 045 997
- DE-A1-102013 016 824
- US-A1- 2009 134 668

## Beschreibung

### Gebiet der Erfindung

Die vorliegende Erfindung betrifft ein Fahrzeug umfassend einen elektrischen Antriebsmotor und eine Batterievorrichtung als Energiespeicher für den elektrischen Antriebsmotor, also insbesondere ein Elektro- oder Hybridfahrzeug.

Die DE 10 2010 045 997 A1 offenbart ein Fahrzeug nach dem Oberbegriff des Anspruchs 1.

### Stand der Technik

Derartige Fahrzeuge mit einer Batterievorrichtung zur Speisung eines Antriebsmotors benötigen üblicherweise relativ große Batterievorrichtungen, die möglichst platzsparend an dem Fahrzeug untergebracht werden müssen. Dazu ist es bekannt, den Raum nahe an einem Unterboden des Fahrzeuges und insbesondere auch in einem Mitteltunnel des Unterbodens, der oft zur Aufnahme einer Antriebswelle benötigt wird, zu nutzen. Die Nutzung eines solchen Raumes in einem Mitteltunnel eines Fahrzeuges hat jedoch den Nachteil, dass bei einem seitlichen Aufprall auf das Fahrzeug ("Seitencrash") die Tunnelwände eine Schwachstelle und somit eine Gefahr für eine dahinterliegende Batterievorrichtung darstellen, da die auftretende Last durch die Beschaffenheit der Tunnelwände und deren geometrischen Aufbau nur sehr wenig abgefangen oder weitergeleitet wird.

### Zusammenfassung der Erfindung

Es ist eine Aufgabe der Erfindung, ein Fahrzeug der genannten Art in dieser Hinsicht zu verbessern und insbesondere ein Fahrzeug anzugeben, das die Sicherheit einer Batterievorrichtung, die im Bereich eines Mitteltunnels des Fahrzeuges angeordnet ist, erhöht.

Die Lösung der Aufgabe erfolgt durch ein Fahrzeug umfassend einen elektrischen Antriebsmotor und eine Batterievorrichtung als Energiespeicher für den elektrischen Antriebsmotor, wobei die Batterievorrichtung ein Batteriegehäuse aufweist, das zumindest teilweise den in einem Mitteltunnel des Fahrzeugs zur Verfügung stehenden Raum ausfüllt, wobei zu beiden Seiten des Mitteltunnels einander gegenüberliegend angeordnete Sitzquerträger ausgebildet sind, wobei im Batteriegehäuse, innerhalb des im Mitteltunnel des Fahrzeugs zur Verfügung stehenden Raumes, ein Lastpfadoptimierungsbauteil so angeordnet ist, dass Seitenkräfte über das Lastpfadoptimierungsbauteil von einem Sitzquerträger an den gegenüberliegenden Sitzquerträger übertragen werden.

Erfindungsgemäß wird somit innerhalb der Batterievorrichtung, nämlich im Batteriegehäuse, ein Bauteil, nämlich das sogenannte "Lastpfadoptimierungsbauteil" verbaut, das dazu eingerichtet ist, auftretende Seitenkräfte aus einem Sitzquerträger an einen gegenüberliegenden Sitzquerträger zu übertragen, wobei diese Übertragung der Kräfte vorzugsweise in beinen Richtungen jeweils über die Kette Sitzquerträger - Lastpfadoptimierungsbauteil - Sitzquerträger erfolgt. Das Lastpfadoptimierungsbauteil muss dazu eine ausreichende mechanische Festigkeit aufweisen um auftretende Kräfte in größerem Ausmaß als beispielsweise die Tunnelwände eines Mitteltunnels weiter leiten zu können.

Dazu sind die Sitzquerträger einander gegenüberliegend, also links und rechts vom Mitteltunnel angeordnet, und stehen daher bevorzugt im Wesentlichen miteinander in Flucht. Um die Lasten von den Sitzquerträgern übertragen zu können, sind bevorzugt zumindest die Enden des Lastpfadoptimierungsbauteils ebenfalls gegenüberliegende den Enden der Sitzquerträger angeordnet, und stehen somit bevorzugt im Wesentlichen ebenfalls in Flucht mit den Sitzquerträgern und/oder überragt der Querschnitt des Lastpfadoptimierungsbauteils die Querschnitte der Sitzquerträger.

Das Lastpfadoptimierungsbauteil kann somit insbesondere die Wände des Mitteltunnels an deren Innenseite in einem Crashfall abstützen und im Falle eines Seitencrashs einen steifen Lastpfad zusammen mit den Sitzquerträgern ausbilden.

Die Batterievorrichtung ist durch die Anordnung des Lastpfadoptimierungsbauteils innerhalb der Batterievorrichtung auch einfach, insbesondere von unten, in das Fahrzeug einbaubar.

Das Lastpfadoptimierungsbauteil ist bevorzugt mittig zwischen zwei Sitzquerträgern montiert, wobei es vorzugsweise eine Verlängerung bzw. eine Projektion der Sitzquerträger darstellt und so den Lastpfad der Sitzquerträger verbindet.

Insbesondere kann das Lastpfadoptimierungsbauteil - im Gegensatz zum Mitteltunnel - im Wesentlichen eine die beiden Seiten des Mitteltunnels verbindende, gerade verlaufende Form aufweisen, wie zum Beispiel die Form einer Platte.

Das Lastpfadoptimierungsbauteil kann bevorzugt ein Strangpressprofil, insbesondere aus Aluminium, sein. Das Strangpressprofil kann besonders bevorzugt Verstrebungen aufweisen, insbesondere in Form einer Fachwerkstruktur.

Das Lastpfadoptimierungsbauteil kann auch ein Faltteil, insbesondere aus Stahl, sein. Insbesondere kann das Faltteil ein im Wesentlichen U-förmiges Profil aufweisen.

Bevorzugt ist zumindest ein Batteriemodul der Batterievorrichtung im Batteriegehäuse am Lastpfadoptimierungsbauteil befestigt, insbesondere am Lastpfadoptimierungsbauteil verschraubt. Besonders bevorzugt ist zumindest ein Batteriemodul oberhalb des Lastpfadoptimierungsbauteils und innerhalb des im Mitteltunnel des Fahrzeugs zur Verfügung stehenden Raumes, am Lastpfadoptimierungsbauteil befestigt. Bevorzugt ist alternativ oder zusätzlich zumindest ein Batteriemodul unten am Lastpfadoptimierungsbauteil befestigt.

Das Lastpfadoptimierungsbauteil kann direkt am Sitzquerträger befestigt, insbesondere verschraubt, sein, so dass der Lastpfad zumindest nicht ausschließlich über die Tunnelwände des Mitteltunnels auf das Lastpfadoptimierungsbauteil, sondern zumindest teilweise direkt von den Sitzquerträgern auf das Lastpfadoptimierungsbauteil erfolgt.

Das Lastpfadoptimierungsbauteil kann auch an einer Bodenplatte befestigt, insbesondere verschraubt sein.

Das Lastpfadoptimierungsbauteil kann einen Fortsatz aufweisen, wobei das im Batteriegehäuse befindliche Lastpfadoptimierungsbauteil über den Fortsatz an einem Sitzquerträger und/oder einer Bodenplatte befestigt ist, vorzugsweise verschraubt ist.

Das Lastpfadoptimierungsbauteil kann zumindest im Wesentlichen von einer Wand des Batteriegehäuses bis zur gegenüberliegenden Wand des Batteriegehäuses reichen, wobei diese Wände des Batteriegehäuses bevorzugt Wänden des Mitteltunnels jeweils parallel und unmittelbar benachbart angeordnet sind. Zwischen dem Lastpfadoptimierungsbauteil und den Wänden des Mitteltunnels können auch kleine Freiräume bestehen, die den Einbau der Batterievorrichtung erleichtern.

Bevorzugt ist die Unterkante des Lastpfadoptimierungsbauteils etwa in Höhe einer Bodenplatte, insbesondere eines Bodenbleches, des Fahrzeuges angeordnet und die Oberkante des Lastpfadoptimierungsbauteils etwa in Höhe der Sitzquerträger angeordnet. Eine "Bodenplatte" kann dabei nicht nur ein planares Bauteil sein, sondern kann auch strukturiert sein, beispielsweise Wölbungen und Kanten aufweisen. Die Bodenplatte kann auch mit dem Mitteltunnel einstückig ausgestaltet sein. Die Bodenplatte kann, aber muss nicht, aus Metall gebildet sein.

Besonders bevorzugt umfasst die Batterievorrichtung einen Flachspeicher, der unterhalb einer Bodenplatte des Fahrzeuges angeordnet ist und einen weiteren Speicherbereich, der oberhalb der Bodenplatte und oberhalb des Lastpfadoptimierungsbauteils, innerhalb des im Mitteltunnel des Fahrzeugs zur Verfügung stehenden Raumes, angeordnet ist. Der Flachspeicher erstreckt sich bevorzugt über einen großen Teil der Breite oder im Wesentlichen die ganze Breite des Fahrzeuges. Der Flachspeicher kann zusammen mit dem weiteren Speicherbereich im Wesentlichen eine "T"-Form aufweisen.

Vorzugsweise sind Längsträger und/oder Schweller zu beiden Seiten des Mitteltunnels angeordnet, so dass die Längsträger und/oder Schweller den Lastpfad über die Sitzquerträger und das Lastpfadoptimierungsbauteil unterstützten.

Das Lastpfadoptimierungsbauteil kann auch Hohlräume aufweisen, die als Kühlmittelkanäle der Batterievorrichtung verwendet werden.

### Kurzbeschreibung der Zeichnungen

Die Erfindung wird im Folgenden beispielhaft unter Bezugnahme auf die Zeichnungen beschrieben.
- Fig. 1: ist eine Schnittansicht des Unterbodenbereichs eines nicht erfindungsgemäßen Fahrzeuges.
- Fig. 2: ist eine Schnittansicht des Unterbodenbereichs eines erfindungsgemäßen Fahrzeuges, mit Lastpfadoptimierungsbauteil in der Batterievorrichtung.
- Fig. 3: ist dreidimensionale Darstellung eines Rohbaues und zeigt die Lage des Schnittes A-A.
- Fig. 4: ist eine detailliertere Schnittansicht des Unterbodenbereichs eines erfindungsgemäßen Fahrzeuges, gemäß A-A der Fig. 3.
- Fig. 5: ist eine Schnittansicht des Unterbodenbereichs eines erfindungsgemäßen Fahrzeuges, gemäß A-A der Fig. 3, mit einer ersten Formvariante der Batterievorrichtung.
- Fig. 6: ist eine Schnittansicht des Unterbodenbereichs eines erfindungsgemäßen Fahrzeuges, gemäß A-A der Fig. 3, mit einer zweiten Formvariante der Batterievorrichtung.
- Fig. 7: ist eine Schnittansicht des Unterbodenbereichs eines erfindungsgemäßen Fahrzeuges, gemäß A-A der Fig. 3, mit einer dritten Formvariante der Batterievorrichtung.
- Fig. 8: ist eine dreidimensionale Darstellung eines Rohbaues und zeigt die Lage des Schnittes B-B.
- Fig. 9: ist eine Schnittansicht um den Mitteltunnel eines erfindungsgemäßen Fahrzeuges, gemäß B-B der Fig. 8, in einer ersten Befestigungsvariante der Batterievorrichtung.
- Fig. 10: ist eine Schnittansicht um den Mitteltunnel eines erfindungsgemäßen Fahrzeuges, gemäß B-B der Fig. 8, in einer zweiten Befestigungsvariante der Batterievorrichtung (linke Bildhälfte) und in einer dritten Befestigungsvariante (rechte Bildhälfte).
- Fig. 11: ist eine dreidimensionale Darstellung des Unterbodenbereiches eines erfindungsgemäßen Fahrzeuges in einer Ausführungsvariante.

### Detaillierte Beschreibung der Erfindung

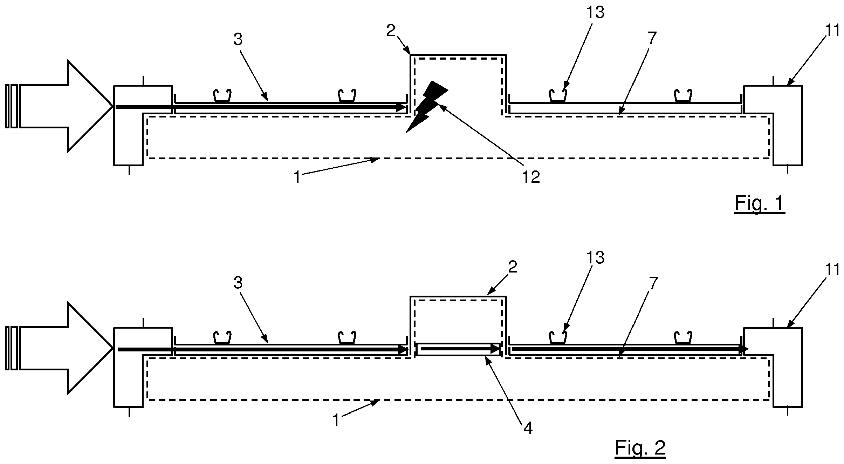

Fig. 1 zeigt eine Schnittansicht des Unterbodenbereichs eines nicht erfindungsgemäßen Fahrzeuges und stellt ein durch die Erfindung gelöstes Problem dar, nämlich eine kollabierende Struktur 12, im Bereich des Mitteltunnels 2 bei einem Seitencrash des Fahrzeuges. Die auftretenden Seitenkräfte an den Sitzquerträgern 3 können eine Zerstörung von Tunnelwänden des Mitteltunnels 2 und der Batterievorrichtung 1 bewirken, da die Kräfte auf die relativ schwachen Tunnelwände treffen und dort nicht ausreichend abgeleitet werden können.

Erfindungsgemäß wird, wie in Fig. 2 dargestellt, ein Lastpfadoptimierungsbauteil 4 in der Batterievorrichtung innerhalb des Batteriegehäuses 1, also innerhalb der Batterievorrichtung verbaut, so dass das Lastpfadoptimierungsbauteil 4 innerhalb eines in dem Mitteltunnel 2 des Fahrzeugs zur Verfügung stehenden Raum liegt.

Das Lastpfadoptimierungsbauteil 4 ist so angeordnet, dass Seitenkräfte (angedeutet durch den Pfeil links in Fig. 1 und 2) über das Lastpfadoptimierungsbauteil 4 von einem Sitzquerträger 3 (zum Beispiel links des Mitteltunnels 2 in Fig. 2) an den gegenüberliegenden Sitzquerträger 3 (zum Beispiel rechts des Mitteltunnels 2 in Fig. 2) übertragen werden. Die Sitzquerträger sind einender gegenüberliegend angeordnet, also annähernd miteinander in Flucht stehend. Durch das Lastpfadoptimierungsbauteil 4 werden die Wände des Mitteltunnels 2 an deren Innenseite in einem Seiten-Crashfall abgestützt, da durch das Lastpfadoptimierungsbauteil 4 ein Lastpfad ausgebildet wird (angedeutet durch den Pfeil im Lastpfadoptimierungsbauteil 4), der die Kräfte eines Sitzquerträgers 3 (angedeutet durch den Pfeil zwischen Sitzquerträgern 3 und Bodenplatten 7) auf den gegenüberliegenden Sitzquerträger 3 ableiten kann.

Das Lastpfadoptimierungsbauteil 4 ist mittig zwischen den zwei Sitzquerträgern 3 montiert.

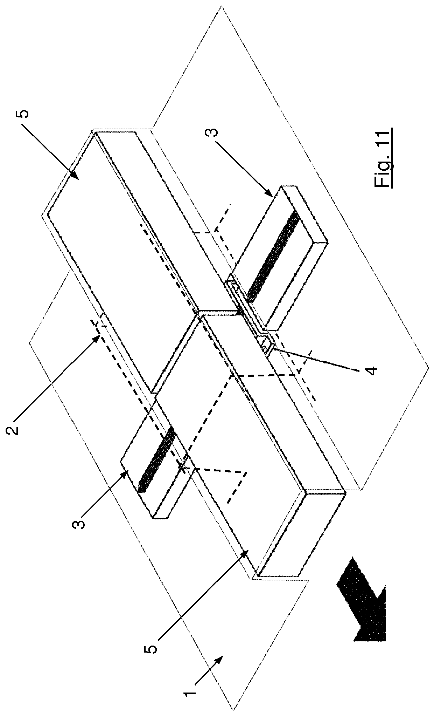

Das Lastpfadoptimierungsbauteil 4 liegt dabei etwa in Höhe der Sitzquerträger 3 und/oder der Bodenplatten 7 - bevorzugt erstreckt es sich zwischen den beiden genannten Höhen. In Längsrichtung des Fahrzeuges ist das Lastpfadoptimierungsbauteil 4 bevorzugt zumindest in dem Längsbereich ausgebildet, in dem die Sitzquerträger 3 vorliegen - siehe zum Beispiel Fig. 11, kann sich aber auch deutlich über diesen Längsbereich hinaus erstrecken.

Am Sitzquerträger 3 können Sitzschienen 13 montiert sein.

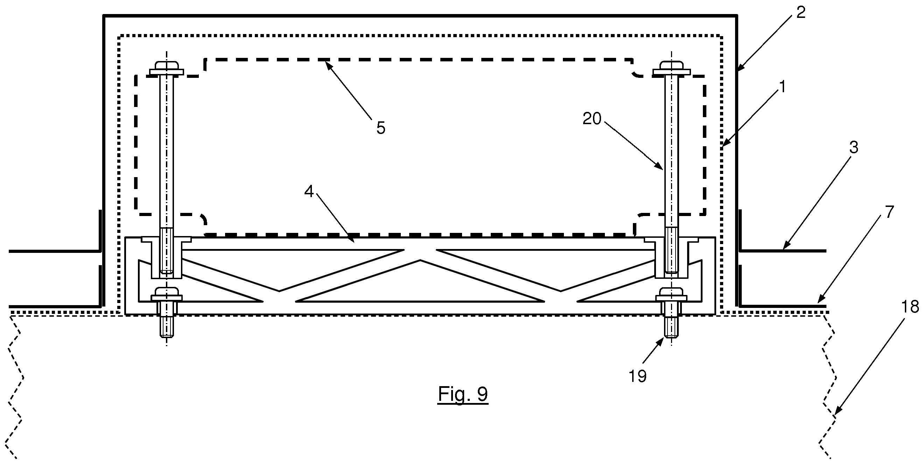

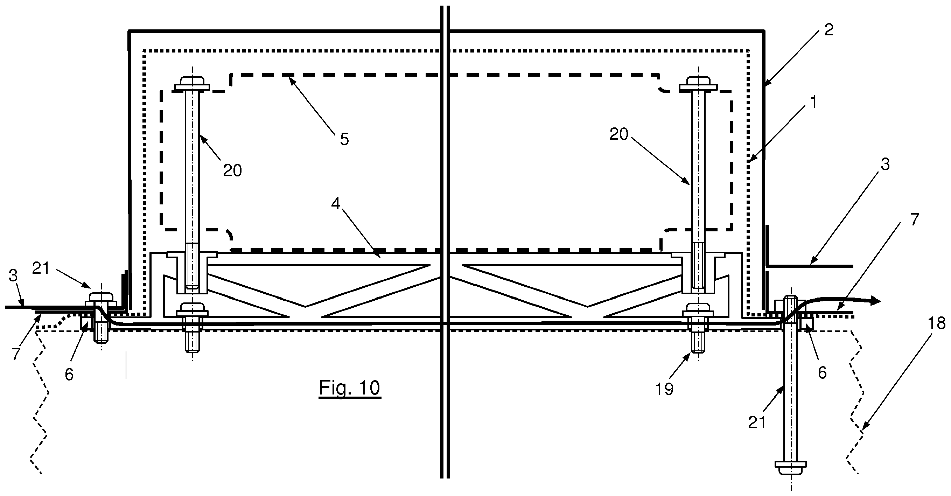

Das Lastpfadoptimierungsbauteil 4 kann ein Strangpressprofil, insbesondere aus Aluminium, sein, wie in Fig. 9 und 10 dargestellt, oder ein Faltteil, insbesondere aus Stahl, wie in Fig. 11 dargestellt.

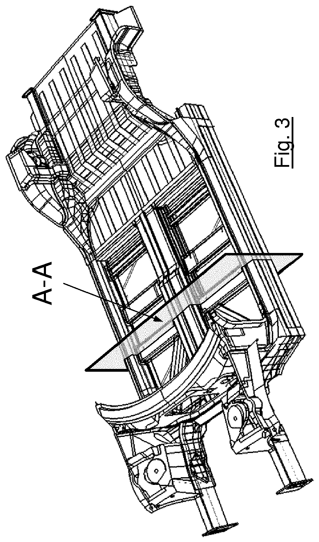

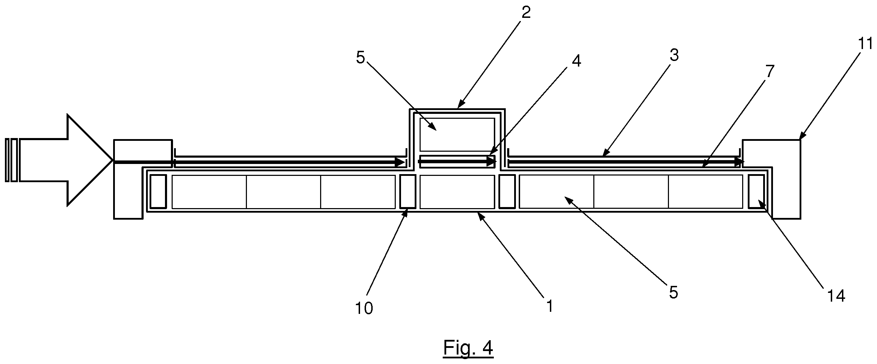

Fig. 3 zeigt in einer dreidimensionalen Darstellung eines Rohbaues, insbesondere einer Plattform, eines erfindungsgemäßen Fahrzeuges die Lage des Schnittes A-A, der in den Fig. 4 bis 7 in verschiedenen Varianten näher dargestellt ist.

Wie in Fig. 4 ersichtlich, kann eine Batterievorrichtung mehrere Batteriemodule 5 innerhalb des Batteriegehäuses 1 aufweisen.

Ein Batteriemodul 5 der Batterievorrichtung kann innerhalb des Batteriegehäuses 1 am Lastpfadoptimierungsbauteil 4 befestigt sein.

Es kann zumindest ein Batteriemodul 5 oberhalb des Lastpfadoptimierungsbauteils 4 und innerhalb des im Mitteltunnel 2 des Fahrzeugs zur Verfügung stehenden Raumes, angeordnet sein, insbesondere am Lastpfadoptimierungsbauteil 4 befestigt sein.

Ein oder mehrere weitere Batteriemodule 5 können auch unterhalb des Lastpfadoptimierungsbauteils 4, bevorzugt unterhalb einer Bodenplatte 7, angeordnet sein und beispielsweise ebenfalls am Lastpfadoptimierungsbauteil 4 befestigt sein. Diese unten angeordneten Batteriemodule 5 können zusammen insbesondere einen Flachspeicher 8 bilden. Der Flachspeicher 8 kann sich bevorzugt über annähernd die gesamte Breite des Fahrzeuges erstrecken. Zusammen mit einem Batteriemodul 5 oberhalb des Lastpfadoptimierungsbauteils 4 als weiterem Speicherbereich 9 kann die Batterievorrichtung somit annähernd eine auf den Kopf gestellte "T"-Form aufweisen.

Die Batterievorrichtung kann einen außen umlaufenden tragenden Batterierahmen 14 aufweisen.

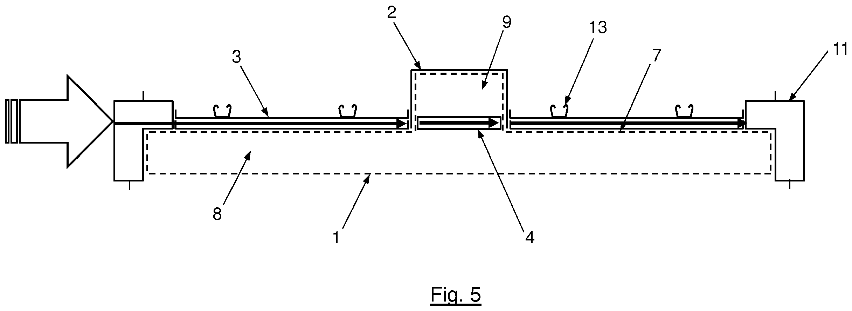

Die oben angegebene Ausbildung der Batterievorrichtung und des Batteriegehäuses 1, umfassend einen Flachspeicher 8 und einen weiteren Speicherbereich 9 im Mitteltunnel 2, der insgesamt eine umgekehrte "T"-Form bildet, ist in der Fig. 5 besonders gut ersichtlich.

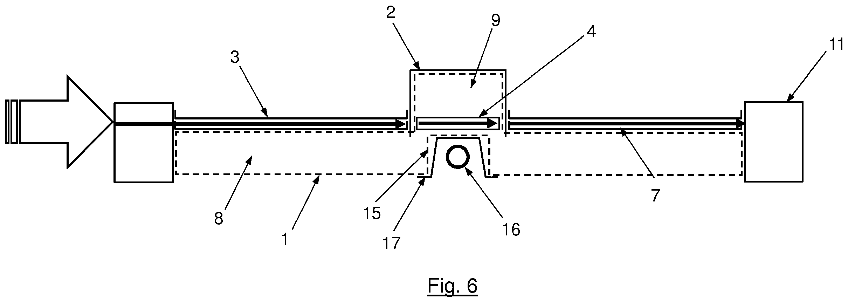

Ein derart geformtes Batteriegehäuse 1 kann unterhalb des Mitteltunnels 2, also in Fahrzeugquerrichtung etwa in der Mitte des Fahrzeuges, eine Ausbuchtung 15 aufweisen, um einen freien Raum für eine Abgasanlage 16 und/oder andere Komponenten, wie etwa Antriebskomponenten oder Verkabelungen bereit zu stellen. Zwischen Ausbuchtung 15 des Batteriegehäuses 1 und Abgasanlage 16 oder anderen Komponenten kann ein Abschirmblech 17 vorgesehen sein (siehe Fig. 6).

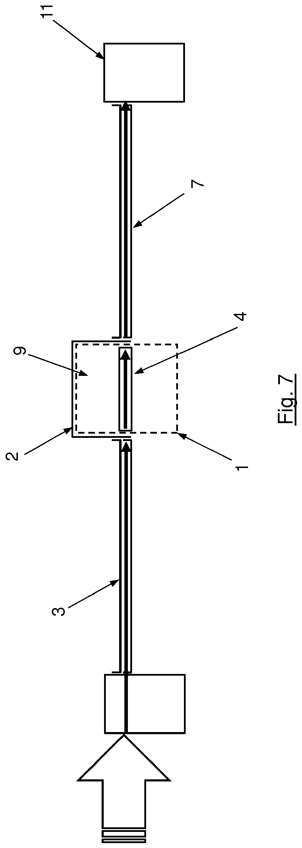

Wie in Fig. 7 dargestellt, kann die Batterievorrichtung auch eine kompaktere Form aufweisen, die horizontal weniger Platz beansprucht als ein Flachspeicher. Insbesondere kann die Batterievorrichtung unterhalb des Lastpfadoptimierungsbauteils 4 etwa die selbe Breite aufweisen, wie oberhalb des Lastpfadoptimierungsbauteils 4 im Raum im Mitteltunnel 2 und somit nur im Tunnelbereich ausgebildet sein und etwa rechteckige oder quadratische Form aufweisen.

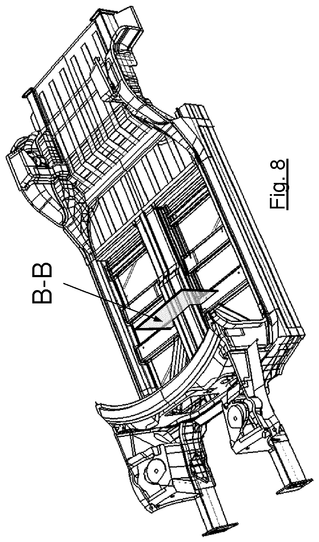

Fig. 8 zeigt wieder eine dreidimensionale Darstellung eines Rohbaus eines erfindungsgemäßen Fahrzeuges und darin die Lage des detaillierteren Schnittes B-B, der in den Fig. 9 und 10 dargestellt ist.

Das Lastpfadoptimierungsbauteil 4 ist hier stranggepresst und weist eine Fachwerkstruktur auf, die den Lastpfad gut übertragen kann.
Das Lastpfadoptimierungsbauteil 4 ist über eine Verschraubung 19 an einem Batteriequertäger 18 unterhalb des Lastpfadoptimierungsbauteils 4 direkt befestigt.

Ferner ist das Batteriemodul 5 oberhalb des Lastpfadoptimierungsbauteils 4 mit diesem mittels einer Verschraubung 20 direkt befestigt.

In Fig. 10 ist eine Schnittansicht um den Mitteltunnel eines erfindungsgemäßen Fahrzeuges, gemäß B-B der Fig. 8, in einer zweiten Befestigungsvariante der Batterievorrichtung (linke Bildhälfte) und in einer dritten Befestigungsvariante (rechte Bildhälfte) dargestellt.

Das Lastpfadoptimierungsbauteil 4 weist in beiden Varianten einen Fortsatz 6 für eine Verschraubung 21 mit dem Batteriequerträger 18, zusätzlich oder alternativ zur Verschraubung 19, auf. In der der rechts dargestellten Variante ist mit dieser Verschraubung 21 zusätzlich die Bodenplatte 7 mitverschraubt, in der links dargestellten Variante sowohl die Bodenplatte 7 als auch der Sitzquerträger 3.

Der Lastpfad ist für eine von links auftreffende Kraft in Fig. 10 wieder als durchgehender Pfeil eingezeichnet.

Das Lastpfadoptimierungsbauteil 4 ist somit direkt am Sitzquerträger 3 befestigt, so dass der Lastpfad zumindest nicht ausschließlich über die Tunnelwände des Mitteltunnels 2 auf das Lastpfadoptimierungsbauteil 4, sondern zumindest teilweise direkt von den Sitzquerträgern 3 auf das Lastpfadoptimierungsbauteil 4 erfolgt.

Fig. 11 ist schließlich eine dreidimensionale Darstellung des Unterbodenbereiches eines erfindungsgemäßen Fahrzeuges in einer Ausführungsvariante. In dieser Variante ist das Lastpfadoptimierungsbauteil 4 durch ein Faltteil gebildet. Das Faltteil stellt ein Faltprofil dar, das sich von einem Sitzquerträger 3 in Richtung zum gegenüberliegenden Sitzquerträger 3 erstreckt. Der als Pfeil eingezeichnete Lastpfad durch das Lastpfadoptimierungsbauteil 4 verläuft wieder in Querrichtung, normal auf die in Fig. 11 unten links ebenfalls als Pfeil dargestellte Fahrtrichtung des Fahrzeuges. Der selbe Aufbau von Sitzquerträger 3 - Lastpfadoptimierungsbauteil 4 - Sitzquerträger 3, der in Fig, 11 dargestellt ist, kann beispielsweise sowohl an vorderen Sitzquerträgern 3 als auch an hinteren Sitzquerträgern 3 in einem Fahrzeug realisiert sein.

### Bezugszeichenliste

- 1: Batteriegehäuse
- 2: Mitteltunnel
- 3: Sitzquerträger
- 4: Lastpfadoptimierungsbauteil
- 5: Batteriemodul
- 6: Fortsatz
- 7: Bodenplatte
- 8: Flachspeicher
- 9: weiterer Speicherbereich
- 10: Längsträger
- 11: Schweller
- 12: kollabierende Struktur
- 13: Sitzschiene
- 14: Batterierahmen
- 15: Ausbuchtung
- 16: Abgasanlage
- 17: Abschirmblech
- 18: Batteriequertäger
- 19: Verschraubung Batteriequertäger
- 20: Verschraubung Batteriemodul
- 21: Verschraubung Lastpfadoptimierungsbauteil

## Patentansprüche

1. Fahrzeug umfassend einen elektrischen Antriebsmotor und eine Batterievorrichtung als Energiespeicher für den elektrischen Antriebsmotor, wobei die Batterievorrichtung ein Batteriegehäuse (1) aufweist, das zumindest teilweise den in einem Mitteltunnel (2) des Fahrzeugs zur Verfügung stehenden Raum ausfüllt, wobei an beiden Seiten des Mitteltunnels (2) einander gegenüberliegend angeordnete Sitzquerträger (3) ausgebildet sind,
**dadurch gekennzeichnet, dass** im Batteriegehäuse (1), innerhalb des im Mitteltunnel (2) des Fahrzeugs zur Verfügung stehenden Raumes, ein Lastpfadoptimierungsbauteil (4) so angeordnet ist, dass Seitenkräfte über das Lastpfadoptimierungsbauteil (4) von einem Sitzquerträger (3) an den gegenüberliegenden Sitzquerträger (3) übertragen werden.

2. Fahrzeug nach zumindest einem der vorhergehenden Ansprüche,
**dadurch gekennzeichne**t, dass das Lastpfadoptimierungsbauteil (4) ein Strangpressprofil, insbesondere aus Aluminium, ist, oder ein Faltteil, insbesondere aus Stahl.

3. Fahrzeug nach zumindest einem der vorhergehenden Ansprüche,
**dadurch gekennzeichnet, dass** zumindest ein Batteriemodul (5) der Batterievorrichtung innerhalb des Batteriegehäuses (1) am Lastpfadoptimierungsbauteil (4) befestigt ist, insbesondere zumindest ein Batteriemodul (5) oberhalb des Lastpfadoptimierungsbauteils (4) und innerhalb des im Mitteltunnel (2) des Fahrzeugs zur Verfügung stehenden Raumes, am Lastpfadoptimierungsbauteil (4) befestigt ist.

4. Fahrzeug nach zumindest einem der vorhergehenden Ansprüche,
**dadurch gekennzeichnet, dass** das Lastpfadoptimierungsbauteil (4) direkt am Sitzquerträger (3) befestigt ist, so dass der Lastpfad zumindest nicht ausschließlich über die Tunnelwände des Mitteltunnels (2) auf das Lastpfadoptimierungsbauteil (4), sondern zumindest teilweise direkt von den Sitzquerträgern (3) auf das Lastpfadoptimierungsbauteil (4) erfolgt.

5. Fahrzeug nach Anspruch 4,
**dadurch gekennzeichnet, dass** das Lastpfadoptimierungsbauteil (4) einen Fortsatz (6) aufweist, wobei das im Batteriegehäuse (1) befindliche Lastpfadoptimierungsbauteil (4) über den Fortsatz (6) an einem Sitzquerträger (3) und/oder einer Bodenplatte (7) befestigt, vorzugsweise verschraubt, ist.

6. Fahrzeug nach zumindest einem der vorhergehenden Ansprüche,
**dadurch gekennzeichnet, dass** das Lastpfadoptimierungsbauteil (4) zumindest im Wesentlichen von einer Wand des Batteriegehäuses (1) bis zur gegenüberliegenden Wand des Batteriegehäuses (1) reicht, wobei diese Wände des Batteriegehäuses (1) bevorzugt Wänden des Mitteltunnels (2) jeweils parallel und unmittelbar benachbart angeordnet sind.

7. Fahrzeug nach zumindest einem der vorhergehenden Ansprüche,
**dadurch gekennzeichnet, dass** die Unterkante des Lastpfadoptimierungsbauteils (4) etwa in Höhe einer Bodenplatte (7) des Fahrzeuges angeordnet ist und die Oberkante des Lastpfadoptimierungsbauteils (4) etwa in Höhe der Sitzquerträger (3) angeordnet ist.

8. Fahrzeug nach zumindest einem der vorhergehenden Ansprüche, **dadurch gekennzeichnet, dass** die Batterievorrichtung (1) einen Flachspeicher (8) umfasst, der unterhalb einer Bodenplatte (7) des Fahrzeuges angeordnet ist und einen weiteren Speicherbereich (9), der oberhalb der Bodenplatte (7) und oberhalb des Lastpfadoptimierungsbauteils (4), innerhalb des im Mitteltunnel (2) des Fahrzeugs zur Verfügung stehenden Raumes, angeordnet ist.

9. Fahrzeug nach zumindest einem der vorhergehenden Ansprüche, **dadurch gekennzeichnet, dass** Längsträger (10) und/oder Schweller (11) zu beiden Seiten des Mitteltunnels (2) angeordnet sind, so dass die Längsträger (10) und/oder Schweller (11) den Lastpfad über die Sitzquerträger (3) und das Lastpfadoptimierungsbauteil (4) unterstützten.

10. Fahrzeug nach zumindest einem der vorhergehenden Ansprüche, **dadurch gekennzeichnet, dass** das Lastpfadoptimierungsbauteil (4) Hohlräume aufweist, die als Kühlmittelkanäle der Batterievorrichtung (1) verwendet werden.

## Claims

1. Vehicle comprising an electric drive motor and a battery device as an energy accumulator for the electric drive motor, wherein the battery device comprises a battery housing (1) which at least partially fills the space available in a centre tunnel (2) of the vehicle, wherein seat crossmembers (3) situated opposite each other are formed on both sides of the centre tunnel (2),
**characterized in that** a load path optimization component (4) is situated in the battery housing (1), within the space available in the centre tunnel (2) of the vehicle, in such a way that lateral forces are transmitted via the load path optimization component (4) from one seat crossmember (3) to the opposite seat crossmember (3).

2. Vehicle according to the preceding claim,
**characterized in that** the load path optimization component (4) is an extruded part, in particular made of aluminium, or a folding part, in particular made of steel.

3. Vehicle according to at least one of the preceding claims,
**characterized in that** at least one battery module (5) of the battery device within the battery housing (1) is fastened on the load path optimization component (4), in particular at least one battery module (5) above the load path optimization component (4) and within the space available in the centre tunnel (2) of the vehicle is fastened on the load path optimization component (4).

4. Vehicle according to at least one of the preceding claims,
**characterized in that** the load path optimization component (4) is directly fastened on the seat crossmember (3), and therefore the load path takes place at least not exclusively via the tunnel walls of the centre tunnel (2) toward the load path optimization component (4), but rather at least partially directly from the seat crossmembers (3) toward the load path optimization component (4).

5. Vehicle according to Claim 4,
**characterized in that** the load path optimization component (4) comprises a projection (6), wherein the load path optimization component (4) located in the battery housing (1) is fastened, preferably bolted, on a seat crossmember (3) and/or a base panel (7) via the projection (6).

6. Vehicle according to at least one of the preceding claims,
**characterized in that** the load path optimization component (4) extends at least essentially from one wall of the battery housing (1) up to the opposite wall of the battery housing (1), wherein these walls of the battery housing (1) are preferably situated parallel to and directly adjacent to respective walls of the centre tunnel (2).

7. Vehicle according to at least one of the preceding claims,
**characterized in that** the lower edge of the load path optimization component (4) is situated approximately at the level of a base panel (7) of the vehicle and the upper edge of the load path optimization component (4) is situated approximately at the level of the seat crossmembers (3).

8. Vehicle according to at least one of the preceding claims,
**characterized in that** the battery device (1) comprises a flat accumulator (8) which is situated under a base panel (7) of the vehicle, and comprises a further accumulator area (9) which is situated above the base panel (7) and above the load path optimization component (4), within the space available in the centre tunnel (2) of the vehicle.

9. Vehicle according to at least one of the preceding claims,
**characterized in that** longitudinal beams (10) and/or door sills (11) are situated on both sides of the centre tunnel (2), and therefore the longitudinal beams (10) and/or door sills (11) support the load path across the seat crossmembers (3) and the load path optimization component (4).

10. Vehicle according to at least one of the preceding claims,
**characterized in that** the load path optimization component (4) comprises cavities which are utilized as coolant ducts of the battery device (1).

## Revendications

1. Véhicule comprenant un système d'entraînement comprenant un électromoteur et un dispositif de batterie en tant qu'accumulateur d'énergie pour le système d'entraînement comprenant un électromoteur, le dispositif de batterie présentant un boîtier de batterie (1) qui remplit au moins en partie l'espace disponible dans un tunnel central (2) du véhicule, des traverses de siège (3) disposées en face l'une de l'autre étant réalisées des deux côtés du tunnel central (2), **caractérisé en ce qu'**un composant d'optimisation du chemin de charge (4) est disposé dans le boîtier de batterie (1), à l'intérieur de l'espace disponible dans le tunnel central (2) du véhicule, de telle sorte que des forces latérales soient transmises par le biais du composant d'optimisation du chemin de charge (4) d'une traverse de siège (3) à la traverse de siège opposée (3).

2. Véhicule selon au moins l'une des revendications précédentes, **caractérisé en ce que** le composant d'optimisation du chemin de charge (4) est un profilé extrudé, en particulier en aluminium, ou une pièce pliée, en particulier en acier.

3. Véhicule selon au moins l'une des revendications précédentes, **caractérisé en ce qu'**au moins un module de batterie (5) du dispositif de batterie est fixé dans le boîtier de batterie (1) sur le composant d'optimisation du chemin de charge (4), en particulier au moins un module de batterie (5) est fixé au-dessus du composant d'optimisation du chemin de charge (4) et à l'intérieur de l'espace disponible dans le tunnel central (2) du véhicule, sur le composant d'optimisation du chemin de charge (4).

4. Véhicule selon au moins l'une des revendications précédentes, **caractérisé en ce que** le composant d'optimisation du chemin de charge (4) est fixé directement à la traverse de siège (3), de telle sorte que le chemin de charge ne s'effectue au moins pas exclusivement par le biais des parois de tunnel du tunnel central (2) jusqu'au composant d'optimisation du chemin de charge (4), mais au moins en partie directement depuis les traverses de siège (3) jusqu'au composant d'optimisation du chemin de charge (4).

5. Véhicule selon la revendication 4, **caractérisé en ce que** le composant d'optimisation du chemin de charge (4) présente une saillie (6), le composant d'optimisation du chemin de charge (4) se trouvant dans le boîtier de batterie (1) étant fixé, de préférence vissé, par le biais de la saillie (6) sur une traverse de siège (3) et/ou une plaque de sol (7).

6. Véhicule selon au moins l'une des revendications précédentes, **caractérisé en ce que** le composant d'optimisation du chemin de charge (4) s'étend au moins essentiellement depuis une paroi du boîtier de batterie (1) jusqu'à la paroi opposée du boîtier de batterie (1), ces parois du boîtier de batterie (1) étant de préférence disposées à chaque fois parallèlement et en position immédiatement adjacente à des parois du tunnel central (2).

7. Véhicule selon au moins l'une des revendications précédentes, **caractérisé en ce que** le bord inférieur du composant d'optimisation du chemin de charge (4) est disposé approximativement à la hauteur d'une plaque de sol (7) du véhicule et le bord supérieur du composant d'optimisation du chemin de charge (4) est disposé approximativement à la hauteur des traverses de siège (3).

8. Véhicule selon au moins l'une des revendications précédentes, **caractérisé en ce que** le dispositif de batterie (1) comprend un accumulateur plat (8) qui est disposé en dessous d'une plaque de sol (7) du véhicule et une région d'accumulateur supplémentaire (9) qui est disposée au-dessus de la plaque de sol (7) et au-dessus du composant d'optimisation du chemin de charge (4), à l'intérieur de l'espace disponible dans le tunnel central (2) du véhicule.

9. Véhicule selon au moins l'une des revendications précédentes, **caractérisé en ce que** des longerons (10) et/ou des bas de marche (11) sont disposés des deux côtés du tunnel central (2), de telle sorte que les longerons (10) et/ou les bas de marche (11) supportent le chemin de charge par le biais des traverses de siège (3) et du composant d'optimisation du chemin de charge (4).

10. Véhicule selon au moins l'une des revendications précédentes, **caractérisé en ce que** le composant d'optimisation du chemin de charge (4) présente des cavités qui sont utilisées en tant que canaux de réfrigérant du dispositif de batterie (1).
